(19) Europäisches Patentamt
European Patent Office
Office européen des brevets

(11) **EP 3 842 710 B1**

(12) **EUROPÄISCHE PATENTSCHRIFT**

(45) Veröffentlichungstag und Bekanntmachung des Hinweises auf die Patenterteilung:
**29.01.2025 Patentblatt 2025/05**

(21) Anmeldenummer: **19219205.2**

(22) Anmeldetag: **23.12.2019**

(51) Internationale Patentklassifikation (IPC):
**F25B 15/06** *(2006.01)*

(52) Gemeinsame Patentklassifikation (CPC):
**F25B 15/06;** Y02A 30/27; Y02B 30/62; Y02E 60/14

(54) **VERFAHREN ZUM BETREIBEN EINER SORPTIONSANLAGE UND SORPTIONSANLAGE**

METHOD FOR OPERATING A SORPTION SYSTEM AND SORPTION SYSTEM

PROCÉDÉ DE FONCTIONNEMENT D'UNE INSTALLATION DE SORPTION ET INSTALLATION DE SORPTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.06.2021 Patentblatt 2021/26**

(73) Patentinhaber: **Technische Universität Berlin 10623 Berlin (DE)**

(72) Erfinder: **PETERSEN, Stefan 10245 Berlin (DE)**

(74) Vertreter: **Bittner, Thomas L. Boehmert & Boehmert Anwaltspartnerschaft mbB Pettenkoferstrasse 22 80336 München (DE)**

(56) Entgegenhaltungen:
**EP-A2- 0 152 931    JP-U- S5 339 360 US-A1- 2019 128 582**

**Beschreibung**

Die Erfindung betrifft ein Verfahren zum Betreiben einer Sorptionsanlage, eine Anordnung für eine Sorptionsanlage sowie eine Sorptionsanlage.

Hintergrund

Der Bedarf an Kälteenergie und damit der Gesamtenergiebedarf ist aufgrund erhöhter Arbeitsplatzanforderungen und Komfortwünsche, aufgrund notwendiger Kühlung von Lebensmitteln, aber auch zur Kühlung und Temperierung von temperatursensiblen Produktionsprozessen stetig im Steigen begriffen. Im Bereich der Gebäudetechnik sind aktuell jährliche Wachstumsraten von 8 % bis 12 % zu verzeichnen. Damit ist die Kältetechnik weltweit einer der am schnellsten wachsenden Energieverbraucher im Gebäudesektor.

Die üblicherweise fluktuierenden Lasten in der Gebäudekühlung mit den in den Versorgerstrukturen immer flexibler werdenden Angebotsmengen an Energie erfordern neue Speicherkonzepte, um wahlweise auf Seiten des primären Energieträgers (Strom, Wärme) oder auf Seiten der Energienutzer (Bewegung, Wärme, Kälte) diese Energie zu speichern. Wärme- und Kältespeicher unterscheiden sich im Wesentlichen im Temperaturniveau der zu speichernden Energie.

Speichertechnologien zur Wärme- oder Kältespeicherung lassen sich allgemein in drei Gruppen einteilen: Sensiblen Speicher, latente Speicher und thermochemische Speicher. Sensible Speicher sind mit flüssigem oder festem Speichermedium vorhanden und nutzen den Bereich zwischen zwei Temperaturniveaus, um Energie zu speichern. Die bekanntesten Vertreter sind der Warm- und Kaltwasserspeicher. Bei latenten Speichern wird die latente Wärme bei Phasenübergängen (fest - flüssig oder flüssig - gasförmig) zur Energiespeicherung genutzt. Insbesondere sind latente Speicher unter Verwendung eines Phase-Changing-Materials (PCM) zur Speicherung mit höheren Energiedichten am Markt vertreten. Im Bereich der latenten Speicher ist das bekannteste und umwelttechnisch unbedenklichste PCM Eiswasser oder sogenannter Eis-Slurry. Paraffine und ähnliche Stoffe werden ebenfalls eingesetzt, um einen Phasenwechsel auf dem angestrebten Temperaturniveau zu ermöglichen. Die thermochemischen Speicher schließlich können in chemische Speicher sowie Sorptionsspeicher unterteilt werden und letztere in Absorptionsspeicher sowie Adsorptionsspeicher.

In der Kältetechnik stellt die Speicherung eine besondere Herausforderung dar. Bei Nutztemperaturen, die in der Gebäudetechnik häufig bei ca. 5 °C bis 9 °C liegen, werden in der Regel sensible Wasserspeicher eingesetzt. Anders als in der Heizungstechnik, wo häufig eine Temperaturspanne von 30 K bis 50 K zwischen einem geladenen und entladenen Speicher genutzt werden kann, sind dies bei einem Kaltwasserspeicher mit Nutztemperaturen von 5 °C bis 9 °C nur wenige Kelvin, da der Speicher im Mittel ein niedrigeres Temperaturniveau als die Nutztemperatur aufweisen muss. Damit reduziert sich der thermische Speicherinhalt auf ca. 5 % bis 15 % im Vergleich zu einem Warmwasserspeicher.

Alternativ können Eisspeicher eingesetzt werden. Diese funktionieren auch dann noch, wenn Nutztemperaturen um den Gefrierpunkt bereitgestellt werden müssen, und verfügen über eine wesentlich höhere energetische Speicherdichte. Um dem Einfrieren des Speichermediums vorzubeugen, muss anstelle von Kaltwasser eine Kaltsole verwendet werden und daher bei Klimaanwendungen gegebenenfalls eine Systemtrennung zum Gebäude erfolgen. Eisspeicher eignen sich insbesondere für Nutztemperaturen um 0 °C. Dies gilt auch bei Nutztemperaturen oberhalb von 4 °C bis 5 °C, wenn hohe Energiedichten beabsichtigt sind. Steht Kosteneffizienz im Vordergrund, sind hingegen sensible Speicher vorzuziehen. Die Speicherdichte eines Eisspeichers ist mit ca. 200 kJ / kg etwa zehnmal so groß wie bei einem sensiblen Wasserspeicher für die Speicherung von Kaltwasser. Allerdings sinkt bei höheren Nutztemperaturniveaus die Effizienz in der Kälteerzeugung zur Beladung eines Eisspeichers gegenüber sensibler Speicherung. Es existieren auch PCM-Speicher für andere Phasenwechseltemperaturen (z. B. 10 °C), jedoch haben sich solche Speicher aufgrund der bisherigen Kosten, technischen Realisierbarkeit und im Vergleich zu Eisspeichern geringeren Energiedichten bisher nicht durchgesetzt.

Es besteht somit ein Bedarf an weiterer Technik zur Kältespeicherung. Solche Techniken sind auch im Zusammenhang mit Kälteerzeugung, etwa Absorptionskälteanlagen, von Interesse.

In bekannten Absorptionskälteanlagen sind Absorber und Kondensator mit demselben Wärmesenkenkreislauf / Kühlfluidkreislauf zur Abfuhr von Wärme verbunden. Hierbei werden häufig zuerst der Absorber und anschließend der Kondensator von Kühlfluid des Kühlfluidkreislaufs durchströmt. In einzelnen Anlagen werden auch zuerst der Kondensator und dann der Absorber oder beide parallel durchströmt. In jedem Fall aber werden bekannte Absorptionskälteanlagen derart betrieben, dass das Durchströmungsregime bereits durch den Hersteller der Absorptionskälteanlagen vorgegeben wird und eine variierende Zufuhr von Kühlfluid im Betrieb weder für Absorber noch für den Kondensator separat möglich ist.

Um Unterschiede zwischen Erzeugerleistung und Verbraucherlast auszugleichen und Lasten zu decken, die durch die Erzeuger nicht abgedeckt werden können, werden in Absorptionskälteversorgungsanlagen auch Speicher (üblicherweise sensible Speicher) installiert. Diese werden von den Erzeugern geladen, wenn die Last des Verbrauchers gerade gering ist und entladen, wenn die Last der Verbraucher über den Erzeugungskapazitäten liegt.

Im Dokument EP 0 152 931 A2 ist ein Verfahren zum Betreiben einer monovalenten Generator-Absorptionswärmepumpen-Heizanlage für Raumheizung und Warmwasserbereitung offenbart. Um eine vielstufig periodisch wirkende Absorptionswärmepumpe mit geringer Anzahl von Apparaten und unter Vermeidung von anfälligen, wartungsbedürftigen und energieverzehrenden Bauteilen oder Aggregaten bereitzustellen, ist ein periodischer Wechsel einer Betriebsphasen-Austreibung mit Kondensation und Verdampfung mit Absorption bei unterschiedlichen Druckniveaus vorgesehen. EP 0 152 931 A2 offenbart ein Verfahren gemäß dem Oberbegriff von Anspruch 1; und eine Vorrichtung gemäß dem Oberbegriff von Anspruch 13.

Das Dokument JP S 5 339 360 U betrifft eine doppeltwirkende Absorptionskältemaschine, die Wasser als Kältemittel und eine Salzlösung als Absorptionsmittel verwendet, sodass die für den Betrieb und das Anfahren erforderliche Anfahrzeit insbesondere durch Verbesserung der Anlaufeigenschaften verkürzt werden kann.

Im Dokument US 2019 / 128 582 A1 ist ein Verfahren zum Betreiben eines Absorptionswärmepumpensystems offenbart, insbesondere hinsichtlich einer Strömung von hydronischer Kühlflüssigkeit durch einen Kondensator während des Systemstarts oder einer niedrigen Kühlflüssigkeitstemperatur. Um eine Zeit zu minimieren, die eine Absorptionswärmepumpe benötigt, um eine maximale Kühl- oder Heizleistung zu erreichen, ist es wünschenswert, dass ein Druck auf Hochdruckseite schnellstmöglich ansteigt und ein weiterer Druck auf Niederdruckseite schnellstmöglich abfällt.

### Zusammenfassung

Aufgabe der Erfindung ist es, ein Verfahren zum Betreiben einer Sorptionsanlage und eine Anordnung für eine Sorptionsanlage anzugeben, mit denen zusätzlich Wärme- und / oder Kältespeicherung in kompakter und kostengünstiger Weise erreicht ist.

Zur Lösung sind ein Verfahren zum Betreiben einer Sorptionsanlage und eine Anordnung für eine Sorptionsanlage gemäß den unabhängigen Ansprüchen 1 und 13 geschaffen. Weitere Ausgestaltungen sind Gegenstand abhängiger Unteransprüche Nach einem Aspekt ist ein Verfahren zum Betreiben einer Sorptionsanlage geschaffen. Die Sorptionsanlage weist einen Kühlfluidkreislauf mit einem Kühlfluid; einen Prozessmittelkreislauf mit einem Kältemittel und einem Lösungsmittel; einen Absorber, der mit dem Kühlfluidkreislauf und dem Prozessmittelkreislauf verbunden ist; einen Kondensator, der mit dem Kühlfluidkreislauf und dem Prozessmittelkreislauf verbunden ist; und eine Regeleinrichtung auf. Im Betrieb der Sorptionsanlage wird das Kühlfluid dem Absorber und dem Kondensator zugeführt, und mittels der Regeleinrichtung werden eine Zufuhr des Kühlfluids zum Absorber und eine Zufuhr des Kühlfluids zum Kondensator unterschiedlich zueinander geregelt, wobei ein Durchströmungsverhältnis für einen Durchfluss des Kühlfluids durch den Absorber und einen Durchfluss des Kühlfluids durch den Kondensator geregelt wird, wobei die Zufuhr des Kühlfluids zum Absorber und die Zufuhr des Kühlfluids zum Kondensator unabhängig voneinander geregelt werden.

Nach einem anderen Aspekt ist eine Anordnung geschaffen, welche Folgendes aufweist: einen Kühlfluidkreislauf mit einem Kühlfluid; einen Prozessmittelkreislauf mit einem Kältemittel und einem Lösungsmittel; einen Absorber, der mit dem Kühlfluidkreislauf und dem Prozessmittelkreislauf verbunden ist; einen Kondensator, der mit dem Kühlfluidkreislauf und dem Prozessmittelkreislauf verbunden ist; und eine Regeleinrichtung, die eingerichtet ist, im Betrieb der Sorptionsanlage eine Zufuhr des Kühlfluids zum Absorber und eine Zufuhr des Kühlfluids zum Kondensator unterschiedlich zueinander und ein Durchströmungsverhältnis für einen Durchfluss des Kühlfluids durch den Absorber und einen Durchfluss des Kühlfluids durch den Kondensator zu regeln, wobei die Regeleinrichtung dazu eingerichtet ist, die Zufuhr des Kühlfluids zum Absorber und die Zufuhr des Kühlfluids zum Kondensator unabhängig voneinander zu regeln.

Nach einem weiteren Aspekt ist eine Sorptionsanlage mit der Anordnung geschaffen.

Mittels unterschiedlichen Regelns der Zufuhr von Kühlfluid zum Absorber und der Zufuhr von Kühlfluid zum Kondensator ist eine vollständige und / oder zumindest teilweise Entkopplung der Kühlfluidströme zum Absorber und zum Kondensator erreicht.

Das Verfahren ist prinzipiell für alle kontinuierlich arbeitenden Sorptionsanlagen zur Wärme- und / oder Kälteerzeugung geeignet, die sich eines thermischen Verdichters bedienen und ein Sorbens und ein Sorptiv (bzw. Lösungs- und Kältemittel) als Betriebsmittel nutzen.

Das Verfahren ermöglicht es, die Aufteilung zwischen Kälteerzeuger und Kältespeicher (bzw. Wärmeerzeuger und Wärmespeicher) aufzuheben und diese technischen Gebiete sowie deren Anlagentechnologien zu kombinieren. Die von üblichen Kältespeichern in Niedertemperaturwärmekreisen eingenommene Funktion kann durch das unabhängige Regeln des Kühlfluidkreislaufs ganz oder teilweise abgedeckt werden. Das Verfahren ermöglicht somit die zusätzliche Nutzung der Absorptionskälteanlage als leistungsdichtem Speicher. Folglich kann gegebenenfalls auf den Einbau eines eigenen dedizierten Kältespeichers verzichtet werden. Gleichermaßen könnte ein möglicher Heißwasserspeicher teilweise oder ganz ersetzt werden. Darüber hinaus wird Bauraum gespart, der in Energiezentralen häufig knapp ist. Der Faktor im Unterschied in der volumetrischen Leistungsdichte liegt bei ca. 100. Die gravimetrische Leistungsdichte liegt im Vergleich mit einem Referenzspeicher von ca. 1 m³ Wasservolumen sogar bei einem Faktor von ca. 200, da hier ein großer Anteil an Speichermaterial unnötig wird. Bei größeren Speichern sinkt dieser Faktor sukzessive ab, wir aber im Allgemeinen nicht kleiner als 150 werden. Wesentlich ist des Weiteren, dass auch Sorptionsanlagen wie Absorptionskälteanlagen im Bestand mit geringem Aufwand für das Verfahren nachrüstbar sind.

Das Verfahren ist unabhängig vom Leistungsbereich oder der Bauart der Sorptionsanlage.

Das Verfahren kann mit beliebigen gängigen Lösungs- und / oder Kältemittel betrieben werden. Als Lösungsmittel kann Lithiumbromid eingesetzt werden und als Kältemittel Wasser. Alternativ kann das Verfahren beispielsweise in Ammoniak-Wasser-Anlagen eingesetzt werden.

Das Verfahren kann bei verschiedenen Temperaturniveaus verbundener Wärmequellen und Wärmesenken betrieben werden. Das Temperaturniveau der Niedertemperaturwärmequelle kann sich zwischen -40 °C und 20 °C befinden, insbesondere zur Gebäudekühlung zwischen 5 °C und 16 °C oder zur Lebensmittel- und Arzneimittelkühlung zwischen -10 °C und 5 °C. Das Temperaturniveau der Wärmesenke kann sich zwischen 15 °C und 80 °C, insbesondere zwischen 25 °C und 60 °C, vorzugsweise 30 °C, befinden. Die Wärmesenke kann prinzipiell aber auch andere Temperaturen annehmen. Das Temperaturniveau der Hochtemperaturwärmequelle kann sich zwischen 35 °C und 160 °C, insbesondere zwischen 55 °C und 110 °C, vorzugsweise 90° C, befinden. Es sich auch höhere Temperaturen der Hochtemperaturquelle möglich.

Die Sorptionsanlage kann einen Kühlfluidkreislauf mit einem Kühlfluid; einen Prozessmittelkreislauf mit einem Kältemittel und einem Lösungsmittel; einen Absorber, der mit dem Kühlfluidkreislauf und dem Prozessmittelkreislauf verbunden ist; einen Kondensator, der mit dem Kühlfluidkreislauf und dem Prozessmittelkreislauf verbunden ist; und eine Regeleinrichtung aufweisen. Im Betrieb der Sorptionsanlage kann das Kühlfluid dem Absorber und dem Kondensator zugeführt, und mittels der Regeleinrichtung werden eine Zufuhr des Kühlfluids zum Absorber und eine Zufuhr des Kühlfluids zum Kondensator einzeln geregelt werden. Mittels Regeln der Zufuhr des Kühlfluids zum Absorber und der Zufuhr des Kühlfluids zum Kondensator durch die Regeleinrichtung kann eine Eingangstemperatur des Kühlfluids zum Absorber und eine Eingangstemperatur des Kühlfluids zum Kondensator unabhängig voneinander geregelt werden.

In einem ersten Zustand der Regeleinrichtung im Vergleich zu einem Grundzustand der Regeleinrichtung kann die Zufuhr des Kühlfluids zum Absorber verringert werden und / oder die Zufuhr des Kühlfluids zum Kondensator erhöht werden.

Im ersten Zustand der Regeleinrichtung kann eine Konzentration an Kältemittel in einem Abschnitt eines Lösungsmittelkreislaufs, welcher im Prozessmittelkreislauf gebildet ist und das Lösungsmittel enthält, verringert werden. Mittels Verringerung der Zufuhr von Kühlfluid zum Absorber kann der Wärmeübertragungswert im Absorber verringert und / oder die Temperatur des Kühlfluids im Absorber im Verhältnis zum Grundzustand erhöht werden.

Die Sorptionsanlage kann einen Desorber aufweisen, der mit dem Lösungsmittelkreislauf verbunden ist. Eine Austreibung des Kältemittels im Desorber kann mittels Erhöhen der Konzentration an Kältemittel im Vergleich zum Grundzustand der Regeleinrichtung verringert werden. Eine Austreibung des Kältemittels im Desorber kann auch mittels Absenken des Gleichgewichtsdrucks der Dampfphase im Desorber verringert werden.

Mittels Erhöhen der Zufuhr des Kühlfluids zum Kondensator kann der Wärmeübertragungswert im Kondensator erhöht und / oder die Temperatur des Kühlfluids im Eintritt zum Kondensator verringert werden.

Im ersten Zustand der Regeleinrichtung kann eine Zufuhr des Kältemittels zum Kondensator im Vergleich zum Grundzustand der Regeleinrichtung erhöht werden und anschließend das Kältemittel in einer Speichereinrichtung, die mit dem Prozessmittelkreislauf verbunden ist, gespeichert werden. Die Speichereinrichtung kann insbesondere Teil des Prozessmittelkreislaufs sein. Mittels der Speicherung des Kältemittels kann eine Speicherung von Kälte latent in Form eines flüssig-gasförmigen Phasenwechsels erfolgen.

In einem zweiten Zustand der Regeleinrichtung kann die Zufuhr des Kühlfluids zum Absorber im Vergleich zum Grundzustand der Regeleinrichtung erhöht und / oder die Zufuhr des Kühlfluids zum Kondensator verringert werden.

Im zweiten Zustand der Regeleinrichtung kann das Kältemittel aus der Speichereinrichtung abgegeben werden.

Die Sorptionsanlage kann einen Verdampfer aufweisen, der mit dem Prozessmittelkreislauf verbunden ist. Im zweiten Zustand der Regeleinrichtung kann das Kältemittel aus der Speichereinrichtung dem Verdampfer zugeführt werden und Wärme über den Verdampfer aus einer Niedertemperaturwärmequelle an das Kältemittel abgeführt werden.

Die Speichereinrichtung kann zumindest teilweise im Verdampfer angeordnet sein. Insbesondere kann die Speichereinrichtung vollständig im Verdampfer angeordnet sein. Die Speichereinrichtung kann auch zumindest teilweise außerhalb des Verdampfers angeordnet sein.

Das Kühlfluid kann im Kühlfluidkreislauf über einen Absorberabschnitt zum Absorber und über einen Kondensatorabschnitt zum Kondensator geführt werden. Der Kondensatorabschnitt und Absorberabschnitt kann mit der Regeleinrichtung verbunden werden.

Eine Zufuhr von Kühlfluid zum Absorberabschnitt kann mittels mindestens einer ersten strömungsregulierenden Komponente der Regeleinrichtung geregelt werden. Des Weiteren kann eine Zufuhr von Kühlfluid zum Kondensatorabschnitt mittels mindestens einer zweiten strömungsregulierenden Komponente der Regeleinrichtung geregelt werden.

In Verbindung mit der Anordnung für eine Sorptionsanlage und der Sorptionsanlage können die vorangehend im Zusammenhang mit dem Verfahren zum Betreiben einer Sorptionsanlage beschriebenen Ausgestaltungen entsprechend vorgesehen sein.

**EP 3 842 710 B1**

Beschreibung von Ausführungsbeispielen

Im Folgenden werden weitere Ausführungsbeispiele unter Bezugnahme auf Figuren einer Zeichnung näher erläutert. Hierbei zeigen:

Fig. 1    eine schematische Darstellung einer Sorptionsanlage;

Fig. 2    ein Druck-Temperatur-Diagramm zur Darstellung eines Absorptionskälteanlagenprozesses;

Fig. 3    eine schematische Darstellung zur Regelung eines Kühlfluidkreislaufs für eine Sorptionsanlage;

Fig. 4    eine schematische Darstellung einer Ausführungsform einer Sorptionsanlage mit einer erfindungsgemäßen Anordnung zur Durchführung eines erfindungsgemäßen Verfahrens;

Fig. 5    eine schematische Darstellung einer weiteren Ausführungsform einer nicht erfindungsgemäßen Soprtionsanlage; und

Fig. 6    eine schematische Darstellung einer weiteren Ausführungsform einer Sorptionsanlage mit einer erfindungsgemäßen Anordnung zur Durchführung eines erfindungsgemäßen Verfahrens.

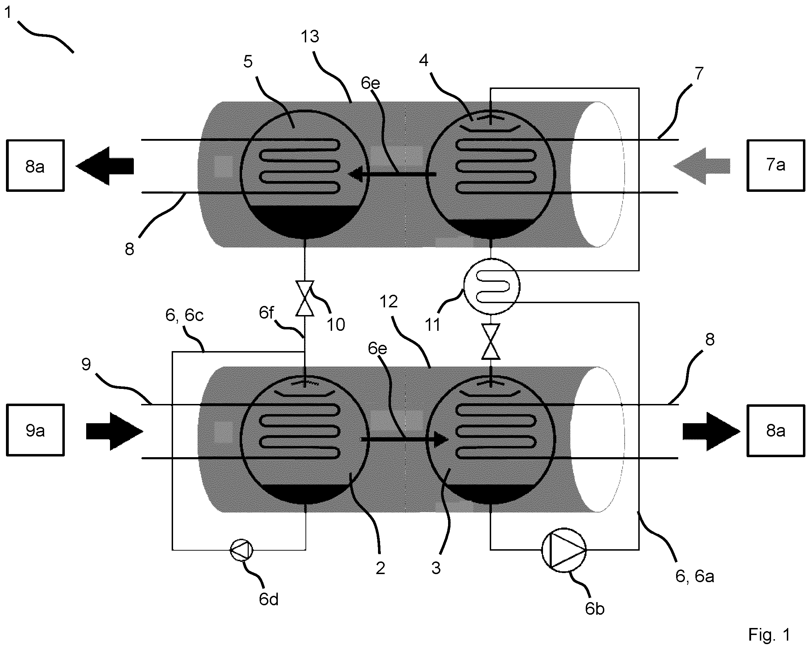

Fig. 1 zeigt eine schematische Darstellung einer Sorptionsanlage in Form einer Absorptionskälteanlage 1 mit einem Verdampfer 2, einem Absorber 3, einem Desorber 4 und einem Kondensator 5, die jeweils mit einem Prozessmittelkreislauf 6 verbunden sind.

Durch den Prozessmittelkreislauf 6 wird Kältemittel und Lösungsmittel geführt. In einem Lösungsmittelkreislauf 6a, mit dem der Absorber 3 und der Desorber 4 verbunden sind, wird des Weiteren eine Lösung mit Lösungsmittel, in dem das Kältemittel gelöst werden kann, geführt. Der Lösungsmittelkreislauf 6a wird mittels einer Pumpe 6b betrieben und ein Abschnitt (Kältemittelumlauf) 6c des Prozessmittelkreislaufs 6, der in der Regel kein oder wenig Lösungsmittel enthält, wird mittels einer Pumpe 6d betrieben. Kältemitteldampf 6e wird vom Verdampfer 2 in den Absorber 3 und vom Desorber 4 in den Kondensator 5 geführt. Flüssiges Kältemittel wird des Weiteren über den Abschnitt 6f vom Kondensator 5 in den Verdampfer 2 geführt.

Der Desorber 4 ist mit einem Hochtemperaturkreislauf 7 verbunden, über den Wärme aus einer Hochtemperaturwärmequelle 7a zur Austreibung des Kältemitteldampfs im Desorber 4 geliefert wird.

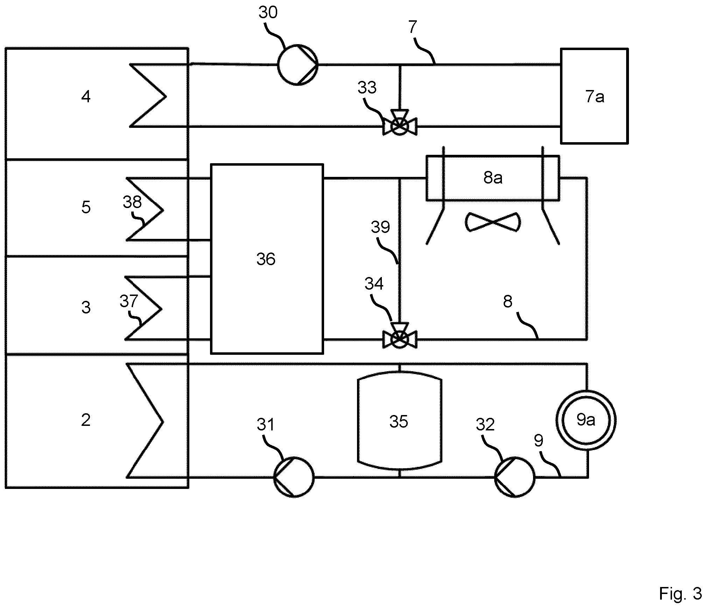

Eine Regelstrecke ist vorhanden (häufig ausgeführt als Kombination aus einer Pumpe und einem Ventil, siehe auch Fig. 3 mit Pumpe 30 und Ventil 33), um die Temperatur und / oder Menge des Fluids aus der (externen) Hochtemperaturwärmequelle 7a, welches dem Desorber 4 zugeführt wird, zu regeln.

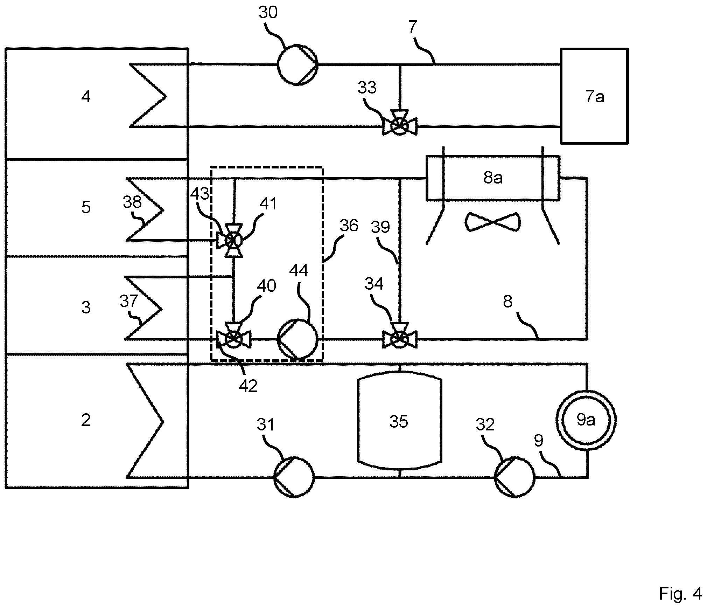

Die Abwärme am Absorber 3 und Kondensator 5 wird mittels Kühlfluid über einen Wärmesenkenkreislauf / Kühlfluidkreislauf 8 zu einer Wärmesenke 8a abgeführt. Dies erfolgt unter Verwendung einer Pumpe, eines Bypasses und eines Ventils (vgl. Fig. 4 mit Pumpe 44, Bypass 39 und Ventil 34).

Mit der Absorptionskälteanlage 1 wird eine Niedertemperaturwärmequelle 9a gekühlt, indem der Niedertemperaturwärmequelle 9a über einen Niedertemperaturkreislauf 9, mit dem der Verdampfer verbunden ist, Wärme entzogen wird.

Im Kältemittelumlauf 6c ist des Weiteren eine Drossel 10 und im Lösungsmittelkreislauf 6a ein Lösungswärmetauscher 11 vorgesehen. Der Verdampfer 2 und der Absorber 3 sind in einem gemeinsamen Gehäuse 12 angeordnet und der Desorber 4 sowie der Kondensator 5 in einem gemeinsamen Gehäuse 13. Die Gehäuse 12, 13 können beispielsweise zylinderförmig sein. Alternativ sind der Verdampfer 2, der Absorber 3, der Desorber 4 und der Kondensator 5 nicht in separaten Gehäusen angeordnet.

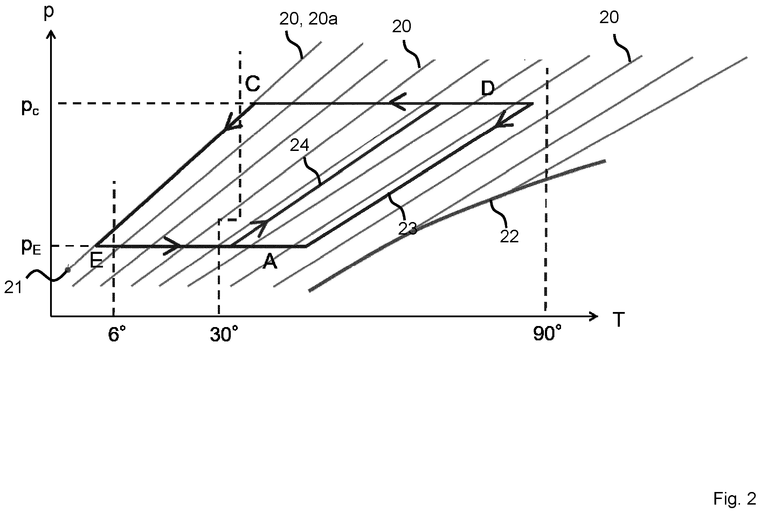

Fig. 2 zeigt ein Druck-Temperatur-Diagramm zur schematischen Darstellung die Lage des Prozess- und Lösungsfelds, sowie des Kältemittels innerhalb eines Absorptionskälteanlagenprozesses. Die jeweiligen Prozessabschnitte am Verdampfer 2, am Absorber 3, am Desorber 4 bzw. am Kondensator 5 sind mit E, A, D bzw. C gekennzeichnet.

im vorliegenden Beispiel fungiert Wasser als Kältemittel und Lithiumbromid (LiBr) als Lösungsmittel. Die folgenden Angaben beschreiben einen möglichen Betriebspunkt. Die Niedertemperaturwärmequelle 9a wird bei 6 °C betrieben, die Wärmesenke 8a bei 30 °C und die Hochtemperaturwärmequellen bei 90 °C. Die Absorptionskälteanlage wird mit Drücken p zwischen einem Verdampferdruck / Evaporatordruck $p_E$ und Kondensatordruck $p_c$ betrieben.

Die Linien / Isosteren 20 stellen Gebiete gleicher Lösungsmittelkonzentration dar. Die Konzentration steigt bei gleichem Druck mit steigender Temperatur. Die Isostere 20a entspricht reinem Wasser ohne LiBr. Punkt 21 stellt den Tripelpunkt des Wassers dar. Rechts von der Kristallisationslinie 22 tritt (abhängig von Druck und Temperatur) Kristallisation auf. Diese Kristallisationslinie verschiebt sich mit höheren Drücken und höheren Temperaturen zu höheren Konzentrationen, bezogen auf die Menge LiBr in Lösung, bei denen die Kristallisation erst einsetzt. Lösung mit niedriger Wasserkonzentration / hoher LiBr-Konzentration fließt vom Desorber zum Absorber (Prozesslagen-Linie 23) und Lösung mit höherer Wasserkonzentration vom Absorber zum Desorber fließt (Prozesslagen-Linie 24).

Die Lage der Eckpunkte des Prozesses und die Lage des Lösungsfelds werden durch die Wärmeübertragungswerte (UA-Werte) der Wärmeübertrager (im Verdampfer 2, Absorber 3, Desorber 4 und Kondensator 5) und die jeweils externen Temperaturen bestimmt. Für jeden einzelnen der Wärmeübertrager gilt, dass die zeitliche Änderung der übertragenen Wärmemenge proportional zum Wärmedurchgangskoeffizienten $U$, zur Fläche A des Wärmeübertragers und zur logarithmischen Temperaturdifferenz $\Delta T_{\log}$ ist:

$$\dot{Q} = U \cdot A \cdot \Delta T_{\log} \ .$$

Dabei stehen die vier Wärmeübertrager und die dort stattfindende Wärmeübertragung in ständiger Abhängigkeit zueinander. Der Abstand der Prozesstemperaturen zu den Temperaturen der Wärmequellen 7a, 9a und der Wärmesenke 8a ergibt sich aus den jeweiligen Wärmeübertragungswerten $U \cdot A$ und ist im Wesentlichen lediglich durch den Betrieb und die vorgegebenen Volumenströme der externen Fluide (Fluide im Wärmesenken-, Hochtemperatur- bzw. Niedertemperaturkreislauf) festgelegt.

Die UA-Werte und die deren Verhältnisse zwischen Absorber, Desorber, Kondensator und Verdampfer unterschiedlicher Absorptionskälteanlagen sind unterschiedlich und auch die UA-Werte eines Anlagentyps können je nach Anwendung, und auch innerhalb einer Installation in unterschiedlichen Betriebsphasen aufgrund externer Bedingungen leicht variieren. Es wirken sich etwa unterschiedliche Temperaturen der Wärmesenke 8a, wie sie bei Absorptionskälteanlagen durch den Betrieb bei unterschiedlichen Umgebungstemperaturen auftauchen, auf die Stoffwerte der Kühlsole aus und beeinflussen so (in bestimmten Grenzen) den UA-Wert. Gleiches gilt für die Veränderungen im Hoch- und Niedertemperaturkreislauf. Auch die Prozessiage, die Temperaturen und Konzentrationen wirken auf die Stoffwerte der Prozessflüssigkeiten und damit auf den jeweiligen prozessseitigen Wärmeübergangswert, der wiederum Einfluss auf den U-Wert hat. Gleiches gilt auch, wenn die Volumenströme der externen Fluide sich zwischen zwei Betriebspunkten unterscheiden. Dabei sind bei Anlageninstallation nach dem Stand der Technik die Volumenströme von Absorber 3 und Kondensator 5 nicht separat regelbar und zudem ihre Eintritts- und / oder Austrittstemperaturen direkt miteinander verknüpft. Auch wenn die Volumenströme und / oder Temperaturen nicht gleich sind, so sind sie nach dem Stand der Technik nicht separat einstellbar.

Fig. 3 zeigt eine schematische Darstellung zur Regelung des Kühlfluidkreislaufs 8 für die Sorptionsanlage 1 mit Verdampfer 2, Absorber, Desorber 4 und Kondensator 5. Zum Betrieb des Hochtemperaturkreislaufs 7 ist hier eine Pumpe 30 und zum Betrieb des Niedertemperaturkreislaufs 9 sind hier Pumpen 31, 32 vorgesehen. Des Weiteren können zur Steuerung von Volumenströmen und / oder Eintrittstemperaturen in die Sorptionsanlage 1 Ventile 33, 34 vorgesehen sein. Im Niedertemperaturkreislauf 9 kann ein Speicher 35 vorgesehen sein, der zum Beispiel als Pendelspeicher ausgeführt ist. Des Weiteren können durch den Speicher 35 unterschiedliche Volumenströme über die Sorptionsanlage 1 und den Nutzerkreis entkoppelt werden und darüber der Speicher 35 geladen oder entladen werden.

Im Kühlfluidkreislauf 8 ist eine Regeleinrichtung 36 angeordnet, bevorzugt zwischen in einem Absorberabschnitt 37 des Kühlfluidkreislaufs 8 beim Absorber 3 bzw. einem Kondensatorabschnitt 38 des Kühlfluidkreislaufs 8 beim Kondensator 5 auf der einen Seite und der Wärmesenke 8a auf der anderen Seite. Die Regeleinrichtung 36 kann mindestens eine Pumpe aufweisen. Ergänzend oder alternativ kann auch eine Pumpe im Kühlfluidkreislauf außerhalb der Regeleinrichtung 36 angeordnet sein (nicht dargestellt). Durch die Regeleinrichtung können die Kühlfluidströme zum Absorber 3 des Kühlfluidkreislaufs und zum Kondensator 5 erfindungsgemäß unabhängig voneinander geregelt werden.

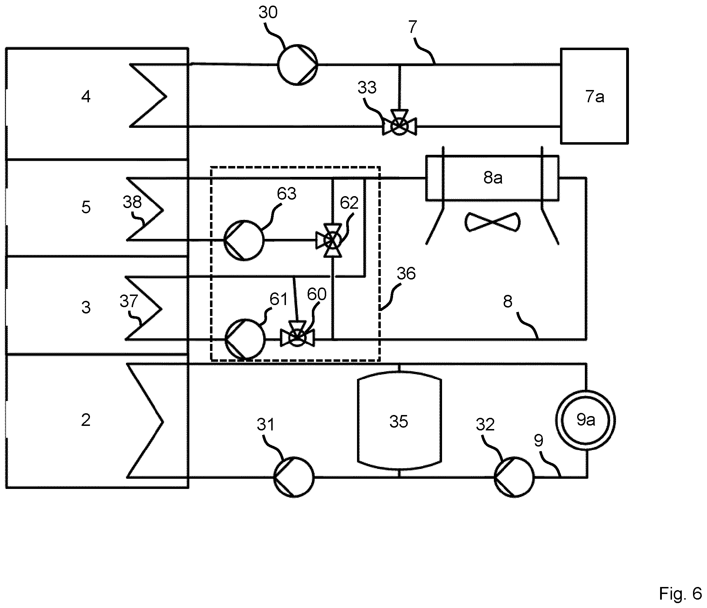

Die Steuereinrichtung 36 ist im Kühlfluidkreislauf 8 parallel zu einem Bypass-Abschnitt 39 angeordnet. Das Verhältnis der Zufuhr von Kühlfluid zur Wärmesenke 8a und der Zufuhr von Kühlfluid zum Bypass-Abschnitt 39 wird mittels des Ventils 34 geregelt. Auf diese Weise kann die Zufuhr von Kühlfluid zur Steuereinrichtung 36 geregelt werden. Alternativ kann auch kein entsprechender Bypass-Abschnitt 39 im Kühlfluidkreislauf 8 vorgesehen sein (vgl. Fig. 6). Der Bypass-Abschnitt 39 kann auch innerhalb der Steuereinrichtung 36 angeordnet sein.

Fig. 4 zeigt eine schematische Darstellung einer erfindungsgemäßen Ausführungsform der Regeleinrichtung 36.

Der Absorber 3 und der Kondensator 5 werden nacheinander mit ganz oder teilweise dem gleichen Kühlfluid durchströmt (serielle Anordnung mit möglichem parallelem Anteil). Es sind zwei regelbare Ventile 40, 41 vorgesehen, die es ermöglichen, im Betrieb den Absorber 3 und den Kondensator 5 unabhängig voneinander hinsichtlich der Durchströmung mit Kühlfluid und damit hinsichtlich der UA-Werte des Absorbers 3 und des Kondensators 5 unabhängig voneinander zu verändern. Auf diese Weise wird in einem ersten Zustand der Regeleinrichtung 36 bei einem vollständigen oder teilweisen aktiven Bypass um den Absorber 3 (sodass verringert bzw. kein Kühlfluid im Absorberabschnitt 37 zum Absorber fließt) das Lösungsfeld zu höheren Konzentrationen an Lösungsmittel verschoben.

Das gegenüber einem Referenzzustand mit geschlossenem Bypass ausgetriebene Kältemittel wird beispielsweise in einem Bereich des Verdampfers 2 gesammelt. Ergänzend oder alternativ wird das Kältemittel im Kondensator oder einer dritten Stelle gesammelt. Das freiwerdende Kältemittel wird im ersten Zustand der Regeleinrichtung 36 nicht genutzt und stellt somit effektiv eine in der Absorptionskälteanlage 1 gespeicherte Kältemenge dar.

Die gespeicherte Kältemenge kann in einem zweiten Zustand der Regeleinrichtung 36 mittels relativer Erhöhung der Zufuhr von Kühlfluid zum Absorber gegenüber der Zufuhr zum Kondensator (im Vergleich zum Prozess der Speicherung des Kältemittels im ersten Zustand der Regeleinrichtung 36 oder im Vergleich zum Grundzustand der Regeleinrichtung 36) abgerufen werden und im Verdampfer 2 zur Kälteerzeugung genutzt werden, bis hin zu einem vollständigen oder teilweisen aktiven Bypass um den Kondensator 5 und den Kondensatorabschnitt 38. Hierbei entspricht die gespeicherte Energiemenge im Fall einer LiBr-Absorptionskälteanlage pro Mengeneinheit Wasser (Kältemittel) dem etwa zehnfachen gegenüber einem Eisspeicher und dem etwa hundertfachen gegenüber einem konventionellen sensiblen Kaltwasserspeicher.

Ergänzend kann aus dem Referenzzustand über die Erhöhung der Zufuhr von Kühlfluid zum Absorber 3 gegenüber der Zufuhr zum Kondensator 5 auch eine bereits in der Speichereinrichtung oder dem Prozessmittelkreislauf 6 vorhandene Kältemittelmenge zur zusätzlichen Kälteerzeugung (gegenüber dem Referenzzustand) genutzt werden, die zu einem anderen Zeitpunkt wieder aufgefüllt werden kann.

Nicht erfindungsgemäß kann lediglich ein einziger effektiv regelbarer Bypass eingesetzt werden, vorzugsweise um den Absorber 3 und den Absorberabschnitt 37, um das Verhältnis an Zufuhr von Kühlfluid bzw. der Durchströmung mit Kühlfluid zwischen Absorber 3 und Kondensator 5 zu regeln. Hierzu wird (zur Erhöhung der Kältemittelmenge im Kältemittelumlauf 6c) das Ventil 40 derart geregelt, dass ein Ventilausgang 42 zum Entladen weiter geöffnet wird. Alternativ und ebenfalls nicht erfindungsgemäß kann auch nur ein effektiver Bypass um den Kondensator 5 und den Kondensatorabschnitt 38 vorgesehen sein. Hierzu wird das Ventil 41 derart geregelt, dass ein Ventilausgang 43 zur Beladung weiter geöffnet wird.

Vorzugsweise wird zuerst der Absorber 3, dann der Kondensator 5 mit Kühlfluid durchströmt. Alternativ kann auch zuerst der Kondensator 5, dann der Absorber 3 durchströmt werden. Die Strömungsrichtung und -menge des Kühlfluids kann mittels einer Pumpe 44 geregelt werden.

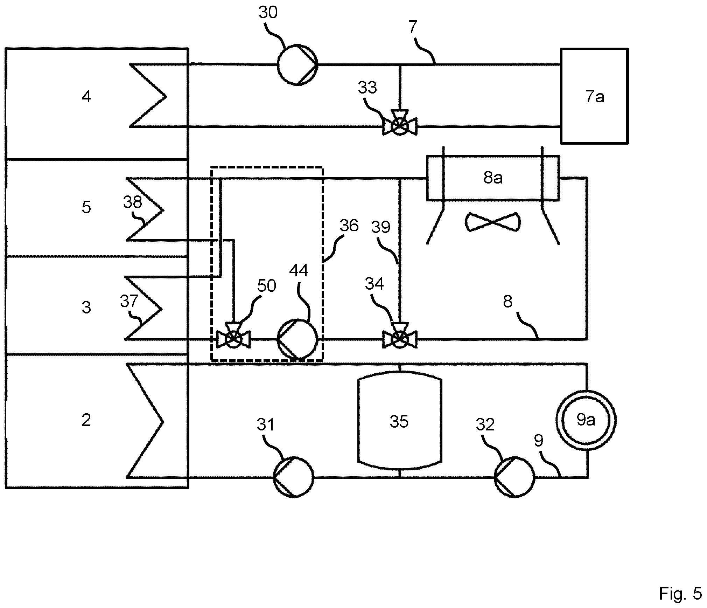

Fig. 5 zeigt eine schematische Darstellung einer nicht erfindungsgemäßen Ausführungsform der Regeleinrichtung 36. Es ist lediglich ein aktiv regelbares Ventil 50 vorgesehen, dass das Verhältnis von durchströmendem Kühlfluid zwischen dem Absorberabschnitt 37 und dem Kondensatorabschnitt 38 regelt. Der Absorberabschnitt 37 und der Kondensatorabschnitt 38 befinden sich in einer parallelen Durchströmungsanordnung. Hier sind die Eintrittstemperaturen identisch. Die Volumenströme durch Absorber 3 und Kondensator 5 können durch die Ventilstellung des Ventils 50 gegenläufig variiert und durch die Pumpe 44 in der Gesamtmenge geregelt werden.

Fig. 6 zeigt eine schematische Darstellung einer weiteren erfindungsgemäßen Ausführungsform der Regeleinrichtung 36. Wie in der Ausführungsform gemäß Fig. 5 werden der Absorberabschnitt 37 und der Kondensatorabschnitt 38 parallel von Kühlfluid durchströmt. Der Kühlfluidstrom durch den Absorberabschnitt 37 wird durch das Ventil 60 und die Pumpe 61 geregelt, während der Kühlfluidstrom durch den Kondensatorabschnitt 38 durch das Ventil 62 und die Pumpe 63 geregelt wird. Auf diese Weise lassen sich nicht nur die Kühlfluidströme getrennt voneinander regeln, auch die Eintrittstemperaturen in den Absorber 3 bzw. den Kondensator 5 können voneinander entkoppelt werden. Hierdurch kann der Speicherprozess von Kältemittel in die Speichereinrichtung und der Prozess der Abrufung von Kältemittel aus der Speichereinrichtung schneller initiiert werden.

Des Weiteren kann die Geschwindigkeit des Speicherns bzw. Abrufens des Kältemittels erhöht werden. Außerdem können Betriebsfeldgrenzen, die durch Kristallisation des Lösungsmittels oder eine mögliche Vereisung des Kältemittels bedingt sind, durch die Freiheit, Temperaturen und Volumenströme des Kühlfluids durch Absorber 3 und Kondensator 5 vollständig unabhängig regeln zu können, im Betrieb einfacher gehalten werden. Gleichzeitig stehen den erforderlichen Sicherheitsroutinen zur Verhinderung von Kristallisation oder Eisbildung in der Absorptionskälteanlage durch die Entkopplung mehr Möglichkeiten zur Verfügung, auf derartige Ereignisse zu reagieren.

Die Speicherfähigkeit hängt von der Menge an Betriebsmittel (Lösungsmittel und Kältemittel) in der Sorptionsanlage ab. Die Größenordnung der Kältespeicherung hängt auch von der Beladungs- und Entladungskonzentration der Lösung und dem jeweiligen Lastfall für die Sorptionsanlage ab. Dabei ist die Beladungskonzentration neben herstellerabhängigen Sicherheitsgrenzen physikalisch durch die Kristallisation beschränkt (vgl. Fig. 4). Die Entladungskonzentration ist von Bauart und Betriebspunkt abhängig.

Am Beispiel von drei mit dem Verfahren ausgestatteten Anlagentypen A1, A2 und A3 mit nominalen Leistungen von 50 W, 160 W bzw. 500 kW wird in Tab. 1 die Speicherfähigkeit der Baugröße von entsprechenden sensiblen Kaltwasserspeichern (Tab. 1, letzte Zeile) gegenübergestellt. Dabei wird eine typische Lösungskonzentrationsdifferenz in $kg_{LiBr}$ / $kg_{Lösung}$ von 10 % zwischen Be- und Entladung angenommen. Daraus geht hervor, dass bei entsprechender Ausgestaltung und Nutzung des Verfahrens bei Einsatz der Anlage A1 ein Speicheräquivalent von 5 m$^3$ ermöglicht ist.

Tab. 1

|  | Einheit | A1 | A2 | A3 |
|---|---|---|---|---|
| Lösung (54 % LiBr in Lösung) | [L] | 55 | 110 | 240 |
| Kältemittel / Wasser | [L] | 26 | 35 | 200 |
|  |  |  |  |  |
| Masse der Lösung | [kg] | 92 | 185 | 403 |

(fortgesetzt)

| | Einheit | A1 | A2 | A3 |
|---|---|---|---|---|
| Masse Lösungsmittel / LiBr | [kg] | 50 | 100 | 218 |
| Masse des Wassers | [kg] | 68 | 120 | 385 |
| | | | | |
| Lösung geladen (63 % LiBr in Lösung) | [kg] | 79 | 158 | 346 |
| Lösung ungeladen (53 % LiBr in Lösung) | [kg] | 127 | 226 | 727 |
| Differenz ($m_{H2O}$) | [kg] | 48 | 68 | 382 |
| | | | | |
| Energetische Speichermenge | [kWh] | 30 | 43 | 239 |
| Kaltwasserspeicheräquivalent | [$m^3$] | 5,2 | 7,3 | 41,1 |

Die erschließbare Speicherkapazität steigt linear mit der Menge an Betriebsmittel. Insofern sind unter entsprechender Erhöhung von Prozessmittelmengen bei gleichen Anlagen weitaus höhere Kaltwasserspeicheräquivalente möglich.

Bezugszeichenliste

| | |
|---|---|
| 1 | Absorptionskälteanlage |
| 2 | Verdampfer |
| 3 | Absorber |
| 4 | Desorber |
| 5 | Kondensator |
| 6 | Prozessmittelkreislauf |
| 6a | Lösungsmittelkreislauf |
| 6b | Pumpe |
| 6c | Abschnitt des Prozessmittelkreislaufs 6 (Kältemittelumlauf) |
| 6d | Pumpe |
| 6e | Kältemitteldampf |
| 6f | Abschnitt |
| 7 | Hochtemperaturkreislauf |
| 7a | Hochtemperaturwärmequelle |
| 8 | Wärmesenkenkreislauf / Kühlfluidkreislauf |
| 8a | Wärmesenke |
| 9 | Niedertemperaturkreislauf |
| 9a | Niedertemperaturwärmequelle |
| 10 | Drossel |
| 11 | Lösungswärmetauscher |
| 12, 13 | Gehäuse |
| 20, 20a | Linien gleicher Konzentration |
| 21 | Punkt (Tripelpunkt von Wasser) |
| 22 | Kristallisationslinie |
| 23, 24 | Prozesslagen-Linien |
| 30 - 32 | Pumpen |
| 33, 34 | Ventile |
| 35 | Speicher |
| 36 | Regeleinrichtung |
| 37 | Absorberabschnitt |
| 38 | Kondensatorabschnitt |
| 39 | Bypass-Abschnitt |
| 40, 41 | Ventile |

| 42, 43 | Ventilausgänge |
| 44 | Pumpe |
| 50 | Ventil |
| 60 | Ventil |
| 61 | Pumpe |
| 62 | Ventil |
| 63 | Pumpe |

**Patentansprüche**

1. Verfahren zum Betreiben einer Sorptionsanlage (1), wobei die Sorptionsanlage Folgendes aufweist:

   - einen Kühlfluidkreislauf (8) mit einem Kühlfluid;
   - einen Prozessmittelkreislauf (6) mit einem Kältemittel und einem Lösungsmittel;
   - einen Absorber (3), der mit dem Kühlfluidkreislauf (8) und dem Prozessmittelkreislauf (6) verbunden ist;
   - einen Kondensator (5), der mit dem Kühlfluidkreislauf (8) und dem Prozessmittelkreislauf (6) verbunden ist; und
   - eine Regeleinrichtung (36);
   wobei im Betrieb der Sorptionsanlage (1) das Kühlfluid dem Absorber (3) und dem Kondensator (5) zugeführt wird,
   wobei mittels der Regeleinrichtung (36) eine Zufuhr des Kühlfluids zum Absorber (3) und eine Zufuhr des Kühlfluids zum Kondensator (5) unterschiedlich zueinander geregelt werden und ein Durchströmungsverhältnis für einen Durchfluss des Kühlfluids durch den Absorber (3) und einen Durchfluss des Kühlfluids durch den Kondensator (5) geregelt wird, **dadurch gekennzeichnet, dass** die Zufuhr des Kühlfluids zum Absorber und die Zufuhr des Kühlfluids zum Kondensator unabhängig voneinander geregelt werden.

2. Verfahren nach Anspruch 1, **dadurch gekennzeichnet, dass** mittels des Regelns der Zufuhr des Kühlfluids zum Absorber (3) und der Zufuhr des Kühlfluids zum Kondensator (5) durch die Regeleinrichtung (36) eine Eingangstemperatur des Kühlfluids zum Absorber (3) und eine Eingangstemperatur des Kühlfluids zum Kondensator (5) unterschiedlich geregelt werden.

3. Verfahren nach Anspruch 1 oder 2, **dadurch gekennzeichnet, dass** in einem ersten Zustand der Regeleinrichtung (36) im Vergleich zu einem Grundzustand der Regeleinrichtung (36)

   - die Zufuhr des Kühlfluids zum Absorber (3) verringert und / oder
   - die Zufuhr des Kühlfluids zum Kondensator (5) erhöht wird.

4. Verfahren nach Anspruch 3, **dadurch gekennzeichnet, dass** im ersten Zustand der Regeleinrichtung (36) eine Konzentration an Kältemittel in einem Abschnitt eines Lösungsmittelkreislaufs (6a) verringert wird, welcher im Prozessmittelkreislauf (6) gebildet ist und das Lösungsmittel enthält.

5. Verfahren nach Anspruch 4, **gekennzeichnet durch** einen Desorber (4), der mit dem Lösungsmittelkreislauf (6a) verbunden ist, wobei eine Austreibung des Kältemittels im Desorber (4) mittels Erhöhen der Konzentration an Kältemittel im Vergleich zum Grundzustand der Regeleinrichtung (36) verringert wird.

6. Verfahren nach einem der Ansprüche 3 bis 5, **dadurch gekennzeichnet, dass** bei Erhöhung der Zufuhr des Kältemittels zum Kondensator (5) im ersten Zustand der Regeleinrichtung (36) anschließend das Kältemittel in einer Speichereinrichtung, die mit dem Prozessmittelkreislauf (6) verbunden ist, gespeichert wird.

7. Verfahren nach mindestens einem der vorhergehenden Ansprüche, **dadurch gekennzeichnet, dass** in einem zweiten Zustand der Regeleinrichtung (36) im Vergleich zum Grundzustand der Regeleinrichtung (36)

   - die Zufuhr des Kühlfluids zum Absorber (3) erhöht und / oder
   - die Zufuhr des Kühlfluids zum Kondensator (5) verringert wird.

8. Verfahren nach Anspruch 6 oder 7, **dadurch gekennzeichnet, dass** im zweiten Zustand der Regeleinrichtung (36) das Kältemittel aus der Speichereinrichtung abgegeben wird.

9. Verfahren nach Anspruch 8, **gekennzeichnet durch** einen Verdampfer (2), der mit dem Prozessmittelkreislauf (6)

9

verbunden ist, wobei im zweiten Zustand der Regeleinrichtung (36) das Kältemittel aus der Speichereinrichtung dem Verdampfer (2) zugeführt und Wärme über den Verdampfer (2) aus einer Niedertemperaturwärmequelle (9a) an das Kältemittel abgeführt wird.

10. Verfahren nach Anspruch 9, **dadurch gekennzeichnet, dass** die Speichereinrichtung zumindest teilweise im Verdampfer (2) angeordnet ist.

11. Verfahren nach mindestens einem der vorhergehenden Ansprüche, **dadurch gekennzeichnet, dass** das Kühlfluid im Kühlfluidkreislauf (8) über

    - einen Absorberabschnitt (37) zum Absorber (3) und
    - einen Kondensatorabschnitt (38) zum Kondensator (5) geführt wird.

12. Verfahren nach Anspruch 11, **dadurch gekennzeichnet, dass**

    - eine Zufuhr von Kühlfluid zum Absorberabschnitt (37) mittels mindestens einer ersten strömungsregulierenden Komponente (40; 60, 61) der Regeleinrichtung (36) geregelt wird und / oder
    - eine Zufuhr von Kühlfluid zum Kondensatorabschnitt (38) mittels mindestens einer zweiten strömungsregulierenden Komponente (41; 62, 63) der Regeleinrichtung (36) geregelt wird.

13. Anordnung für eine Sorptionsanlage (1), aufweisend:

    - einen Kühlfluidkreislauf (8) mit einem Kühlfluid;
    - einen Prozessmittelkreislauf (6) mit einem Kältemittel und einem Lösungsmittel;
    - einen Absorber (3), der mit dem Kühlfluidkreislauf (8) und dem Prozessmittelkreislauf (6) verbunden ist; und
    - einen Kondensator (5), der mit dem Kühlfluidkreislauf (8) und dem Prozessmittelkreislauf (6) verbunden ist;
    - eine Regeleinrichtung (36), die eingerichtet ist, im Betrieb der Sorptionsanlage (1) die Zufuhr des Kühlfluids zum Absorber (3) und die Zufuhr des Kühlfluids zum Kondensator (5) unterschiedlich zueinander und ein Durchströmungsverhältnis für einen Durchfluss des Kühlfluids durch den Absorber (3) und einen Durchfluss des Kühlfluids durch den Kondensator (5) zu regeln, **dadurch gekennzeichnet, dass** die Regeleinrichtung (36) dazu eingerichtet ist, die Zufuhr des Kühlfluids zum Absorber (3) und die Zufuhr des Kühlfluids zum Kondensator (5) unabhängig voneinander zu regeln.

14. Sorptionsanlage (1) mit einer Anordnung nach Anspruch 13.

**Claims**

1. A method for operating a sorption system (1), the sorption system comprising the following:

    - a cooling fluid circuit (8) with a cooling fluid;
    - a process medium circuit (6) with a refrigerant and a solvent;
    - an absorber (3) which is connected to the cooling fluid circuit (8) and to the process medium circuit (6);
    - a condenser (5) which is connected to the cooling fluid circuit (8) and to the process fluid circuit (6); and
    - a control device (36);

        wherein during operation of the sorption system (1), the cooling fluid is fed to the absorber (3) and to the condenser (5),
        wherein by means of the control device (36), a feed of the cooling fluid to the absorber (3) and a feed of the cooling fluid to the condenser (5) are controlled differently from each other and a flow ratio for a flow of the cooling fluid through the absorber (3) and a flow of the cooling fluid through the condenser (5) is controlled, **characterized in that** the feed of the cooling fluid to the absorber and the feed of the cooling fluid to the condenser are controlled independently from each other.

2. The method according to claim 1, **characterized in that** by means of controlling the feed of the cooling fluid to the absorber (3) and the feed of the cooling fluid to the condenser (5) by the control device (36), an input temperature of the cooling fluid to the absorber (3) and an input temperature of the cooling fluid to the condenser (5) are controlled differently.

3. The method according to claim 1 or 2, **characterized in that** in a first state of the control device (36) compared to a basic state of the control device (36),

- the feed of the cooling fluid to the absorber (3) is decreased and/or
- the feed of the cooling fluid to the condenser (5) is increased.

4. The method according to claim 3, **characterized in that** in the first state of the control device (36), a concentration of refrigerant in a portion of a solvent circuit (6a) formed in the process medium circuit (6) and containing the solvent is decreased.

5. The method according to claim 4, **characterized by** a desorber (4) which is connected to the solvent circuit (6a), wherein an expulsion of the refrigerant in the desorber (4) is decreased by means of increasing the concentration of refrigerant compared to the basic state of the control device (36).

6. The method according to any one of claims 3 to 5, **characterized in that** when the feed of refrigerant to the condenser (5) is increased in the first state of the control device (36), the refrigerant is subsequently stored in a storage device which is connected to the process medium circuit (6).

7. The method according to any one of the preceding claims, **characterized in that** in a second state of the control device (36) compared to the basic state of the control device (36),

- the feed of the cooling fluid to the absorber (3) is increased and/or
- the feed of the cooling fluid to the condenser (5) is decreased.

8. The method according to claim 6 or 7, **characterized in that** in the second state of the control device (36), the refrigerant is discharged from the storage device.

9. The method according to claim 8, **characterized by** an evaporator (2) which is connected to the process medium circuit (6), wherein in the second state of the control device (36), the refrigerant is fed from the storage device to the evaporator (2) and heat from a low-temperature heat source (9a) is dissipated to the refrigerant via the evaporator (2).

10. The method according to claim 9, **characterized in that** the storage device is at least partially arranged in the evaporator (2).

11. The method according to any one of the preceding claims, **characterized in that** the cooling fluid in the cooling fluid circuit (8) is fed via

- an absorber portion (37) to the absorber (3), and via
- a condenser portion (38) to the condenser (5).

12. The method according to claim 11, **characterized in that**

- a feed of cooling fluid to the absorber portion (37) is controlled by means of at least one first flow-regulating component (40; 60, 61) of the control device (36) and/or
- a feed of cooling fluid to the condenser portion (38) is controlled by means of at least one second flow-regulating component (41; 62, 63) of the control device (36).

13. An arrangement for a sorption system (1), comprising:

- a cooling fluid circuit (8) with a cooling fluid;
- a process medium circuit (6) with a refrigerant and a solvent;
- an absorber (3) which is connected to the cooling fluid circuit (8) and to the process medium circuit (6); and
- a condenser (5) which is connected to the cooling fluid circuit (8) and to the process medium circuit (6);
- a control device (36) which is configured, during operation of the sorption system (1), to control the feed of the cooling fluid to the absorber (3) and the feed of the cooling fluid to the condenser (5) differently from each other and to control a flow ratio for a flow of the cooling fluid through the absorber (3) and a flow of the cooling fluid through the condenser (5),

**characterized in that** the control device (36) is configured to control the feed of the cooling fluid to the absorber (3) and the feed of the cooling fluid to the condenser (5) independently from each other.

14. A sorption system (1) with an arrangement according to claim 13.

## Revendications

1. Procédé de fonctionnement d'une installation de sorption (1), dans lequel l'installation de sorption comprend :

   - un circuit de fluide de refroidissement (8) avec un fluide de refroidissement ;
   - un circuit de produit de traitement (6) avec un réfrigérant et un solvant ;
   - un adsorbeur (3) relié au circuit de fluide de refroidissement (8) et au circuit de produit de traitement (6) ;
   - un condensateur (5) relié au circuit de fluide de refroidissement (8) et au circuit de produit de traitement (6) ; et
   - un dispositif de régulation (36) ;

     dans lequel, pendant le fonctionnement de l'installation de sorption (1), le fluide de refroidissement est fourni à l'adsorbeur (3) et au condensateur (5),
     dans lequel le dispositif de régulation (36) permet de réguler une alimentation du fluide de refroidissement vers l'adsorbeur (3) et une alimentation du fluide de refroidissement vers le condensateur (5) de façon différente l'une par rapport à l'autre et de réguler un passage du fluide de refroidissement à travers l'adsorbeur (3) et un passage du fluide de refroidissement à travers le condensateur (5), **caractérisé en ce que** l'alimentation du fluide de refroidissement vers l'adsorbeur et l'alimentation du fluide de refroidissement vers le condensateur sont régulées indépendamment l'une de l'autre.

2. Procédé selon la revendication 1, **caractérisé en ce que** la régulation de l'alimentation du fluide de refroidissement vers l'adsorbeur (3) et de l'alimentation du fluide de refroidissement vers le condensateur (5) par le dispositif de régulation (36) permet de réguler différemment une température d'entrée du fluide de refroidissement vers l'adsorbeur (3) et une température d'entrée du fluide de refroidissement vers le condensateur (5).

3. Procédé selon la revendication 1 ou 2, **caractérisé en ce que** dans un premier état du dispositif de régulation (36) en comparaison avec un état de base du dispositif de régulation (36)

   - l'alimentation du fluide de refroidissement vers l'adsorbeur (3) est réduite et/ou
   - l'alimentation du fluide de refroidissement vers le condensateur (5) est augmentée.

4. Procédé selon la revendication 3, **caractérisé en ce que** dans le premier état du dispositif de régulation (36), une concentration en réfrigérant est réduite dans une section d'un circuit de solvant (6a), lequel est formé dans le circuit de produit de traitement (6) et contient le solvant.

5. Procédé selon la revendication 4, **caractérisé par** un désorbeur (4) relié au circuit de solvant (6a), dans lequel une expulsion du réfrigérant dans le désorbeur (4) est réduite en augmentant la concentration en réfrigérant en comparaison avec l'état de base du dispositif de régulation (36).

6. Procédé selon l'une des revendications 3 à 5, **caractérisé en ce que** lors d'une augmentation de l'alimentation du réfrigérant vers le condensateur (5) dans le premier état du dispositif de régulation (36), le réfrigérant est ensuite stocké dans un dispositif de stockage relié au circuit de produit de traitement (6).

7. Procédé selon l'une au moins des revendications précédentes, **caractérisé en ce que** dans un deuxième état du dispositif de régulation (36) en comparaison avec l'état de base du dispositif de régulation (36)

   - l'alimentation du fluide de refroidissement vers l'adsorbeur (3) est augmentée et/ou
   - l'alimentation du fluide de refroidissement vers le condensateur (5) est réduite.

8. Procédé selon la revendication 6 ou 7, **caractérisé en ce que** dans le deuxième état du dispositif de régulation (36), le réfrigérant est délivré à partir du dispositif de stockage.

**9.** Procédé selon la revendication 8, **caractérisé par** un évaporateur (2) relié au circuit de produit de traitement (6), dans lequel, dans le deuxième état du dispositif de régulation (36), le réfrigérant est alimenté vers l'évaporateur (2) à partir du dispositif de stockage et de la chaleur est évacuée vers le réfrigérant à partir d'une source de chaleur à basse température (9a) par le biais de l'évaporateur (2).

**10.** Procédé selon la revendication 9, **caractérisé en ce que** le dispositif de stockage est disposé au moins partiellement dans l'évaporateur (2).

**11.** Procédé selon l'une au moins des revendications précédentes, **caractérisé en ce que** le fluide de refroidissement dans le circuit de fluide de refroidissement (8) est

- alimenté vers l'adsorbeur (3) par le biais d'une section d'adsorbeur (37) et
- alimenté vers le condensateur (5) par le biais d'une section de condensateur (38).

**12.** Procédé selon la revendication 11, **caractérisé en ce que**

- une alimentation de fluide de refroidissement vers la section d'adsorbeur (37) est régulée au moyen d'au moins un premier composant de régulation de débit (40 ; 60, 61) du dispositif de régulation (36) et/ou
- une alimentation de fluide de refroidissement vers la section de condensateur (38) est régulée au moyen d'au moins un deuxième composant de régulation de débit (41 ; 62, 63) du dispositif de régulation (36).

**13.** Agencement pour une installation de sorption (1), présentant :

- un circuit de fluide de refroidissement (8) avec un fluide de refroidissement ;
- un circuit de produit de traitement (6) avec un réfrigérant et un solvant ;
- un adsorbeur (3) relié au circuit de fluide de refroidissement (8) et au circuit de produit de traitement (6) ; et
- un condensateur (5) relié au circuit de fluide de refroidissement (8) et au circuit de produit de traitement (6) :
- un dispositif de régulation (36) configuré pour réguler l'alimentation du fluide de refroidissement vers l'adsorbeur (3) et l'alimentation du fluide de refroidissement vers le condensateur (5) de façon différente l'une par rapport à l'autre et pour réguler un rapport d'écoulement pour un passage du fluide de refroidissement à travers l'adsorbeur (3) et un passage du fluide de refroidissement à travers le condensateur (5), pendant le fonctionnement de l'installation de sorption (1), **caractérisé en ce que** le dispositif de régulation (36) est configuré pour réguler l'alimentation du fluide de refroidissement vers l'adsorbeur (3) et l'alimentation du fluide de refroidissement vers le condensateur (5) indépendamment l'une de l'autre.

**14.** Installation de sorption (1) comprenant un agencement selon la revendication 13.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0152931 A2
- JP S5339360 U
- US 2019128582 A1